(19) **Europäisches Patentamt European Patent Office Office européen des brevets**

(11) **EP 4 627 933 A1**

(12) **EUROPEAN PATENT APPLICATION**
published in accordance with Art. 153(4) EPC

(43) Date of publication:
**08.10.2025  Bulletin 2025/41**

(21) Application number: **23907612.8**

(22) Date of filing: **15.12.2023**

(51) International Patent Classification (IPC):
**A23L 2/38** (2021.01)        **A23L 5/20** (2016.01)
**A23L 27/30** (2016.01)       **A23L 29/212** (2016.01)
**A23L 29/231** (2016.01)      **A23L 29/269** (2016.01)
**A23L 29/10** (2016.01)

(52) Cooperative Patent Classification (CPC):
**A23L 2/38; A23L 5/20; A23L 27/30; A23L 29/10; A23L 29/212; A23L 29/231; A23L 29/269**

(86) International application number:
**PCT/KR2023/020726**

(87) International publication number:
**WO 2024/136326 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022  KR 20220181870**

(71) Applicant: **CJ CheilJedang Corporation**
**Seoul 04560 (KR)**

(72) Inventors:
• **KONG, Moon Hee**
  **Seoul 04560 (KR)**

• **KIM, Sunny**
  **Seoul 04560 (KR)**
• **KIM, Chul Jin**
  **Seoul 04560 (KR)**
• **LEE, Minhyun**
  **Seoul 04560 (KR)**
• **JUNG, Jiwoo**
  **Seoul 04560 (KR)**
• **KIM, Tae Yeon**
  **Seoul 04560 (KR)**
• **PARK, Bomi**
  **Seoul 04560 (KR)**

(74) Representative: **Meissner Bolte Partnerschaft mbB**
**Patentanwälte Rechtsanwälte**
**Postfach 86 06 24**
**81633 München (DE)**

(54) **PLANT-BASED-PROTEIN-CONTAINING DRINK WITH MINIMIZED OFF-FLAVOR AND IMPROVED MOUTHFEEL, AND PREPARATION METHOD THEREFOR**

(57)    Provided are a protein-comprising beverage (Ready-to-Drink, RTD) with minimized off-flavor and improved mouthfeel, and a preparation method thereof.

EP 4 627 933 A1

[FIG. 10]

```
┌─────────────────────────────────────────┐
│   Raw material inspection and weighing   │
└─────────────────────────────────────────┘
                    ↓
┌─────────────────────────────────────────┐
│ Raw material mixing (excluding flavoring agent) │
└─────────────────────────────────────────┘
                    ↓
┌─────────────────────────────────────────┐
│            Pre-homogenization            │
└─────────────────────────────────────────┘
                    ↓
┌─────────────────────────────────────────┐
│                 Cooling                  │
└─────────────────────────────────────────┘
                    ↓
┌─────────────────────────────────────────┐
│          Specification inspection        │
└─────────────────────────────────────────┘
                    ↓
┌─────────────────────────────────────────┐
│           Flavoring agent mixing         │
└─────────────────────────────────────────┘
                    ↓
┌─────────────────────────────────────────┐
│              Homogenization              │
└─────────────────────────────────────────┘
                    ↓
┌─────────────────────────────────────────┐
│        Pasteurization (Sterilization)    │
└─────────────────────────────────────────┘
                    ↓
┌─────────────────────────────────────────┐
│                 Cooling                  │
└─────────────────────────────────────────┘
                    ↓
┌─────────────────────────────────────────┐
│                 Filling                  │
└─────────────────────────────────────────┘
                    ↓
┌─────────────────────────────────────────┐
│                Packaging                 │
└─────────────────────────────────────────┘
                    ↓
┌─────────────────────────────────────────┐
│                Releasing                 │
└─────────────────────────────────────────┘
```

## Description

### [Technical Field]

The present disclosure relates to a plant-based protein-comprising beverage (Ready-to-Drink, RTD) with minimized off-flavor and improved mouthfeel, and a preparation method thereof.

### [Background Art]

In recent years, as consumers' need to consume sufficient protein for health has increased, not only food manufacturers that produce snacks or coffee, etc., but also beverage manufacturers, dairy product manufacturers, and health functional food manufacturers are continuously releasing a variety of products with increased protein content.

In particular, ready-to-drink (RTD) products that are more convenient for consumers to consume, such as products with high contents of animal-based protein or a mixture of animal- and plant-based proteins or products with lower calories by reducing sugar, are being marketed.

However, when actually drinking the beverage products on the market, the higher the protein content, the stronger the off-flavor unique to protein, and in many beverage products, rather strong flavor and aroma, such as chocolate, etc., are used in order to mask the off-flavor. In addition, most beverage products with a high protein content are rather thick to drink, and thus the mouthfeel is not smooth but chalky, or there is an inconvenience of having to shake the beverage products before drinking, due to the protein sedimentation. In addition, protein-comprising beverages with reduced sugar also have a disadvantage of being overly sweet or leaving a lingering aftertaste after drinking the beverage due to the use of high-sweeteners to replace sugar.

### [Disclosure]

### [Technical Problem]

A problem to be solved in the present disclosure is to provide a protein-comprising beverage (Ready-to-drink, RTD) with minimized off-flavor and improved mouthfeel, and a preparation method thereof.

### [Technical Solution]

An object of the present disclosure is to provide a protein-comprising food composition comprising 3% by weight to 15% by weight of a sweetener, 5% by weight to 15% by weight of a protein, 0.1% by weight to 2% by weight of fat and oil, 0.01% by weight to 0.1% by weight of a thickener, 0.05% by weight to 0.5% by weight of an acidity regulator, and 0.01% by weight to 0.1% by weight of an emulsifier, based on 100% by weight of the total food composition.

Another object of the present disclosure is to provide a method of preparing a protein-comprising food, the method comprising the steps of a) preparing a mixture by mixing 3% by weight to 15% by weight of a sweetener, 5% by weight to 15% by weight of a protein, 0.1% by weight to 2% by weight of fat and oil, 0.01% by weight to 0.1% by weight of a thickener, 0.05% by weight to 0.5% by weight of an acidity regulator, and 0.01% by weight to 0.1% by weight of an emulsifier; b) homogenizing and then cooling the mixture; and c) further homogenizing and cooling the cooled mixture.

Still another object of the present disclosure is to provide a protein-comprising food prepared by the method of the present disclosure.

### [Advantageous Effects]

According to the present disclosure, a vegan protein-comprising beverage may be prepared, in which sugar is reduced by using a sweetener, off-flavor of protein and fat and oil is minimized by adding a plant-based protein and vegetable fat and oil, mouthfeel (softness) is improved by adding a thickener with excellent flowability, sedimentation is minimized by adding an acidity regulator and by introducing a secondary homogenization process, and flavor is maximized by excluding a vacuum concentration process.

### [Brief Description of the Drawing]

FIG. 1 shows the results of the sugar content and sugar reduction rate of Example 1 (test 1) to Example 4 (test 4), relative to Comparative Example 1 (control);

FIG. 2 shows the results of the sweetness similarity of Example 1 (test 1) to Example 4 (test 4) to sugar;

FIG. 3 shows the results of analyzing the sweetness sub-attributes of Example 1 (test 1), relative to sugar;

FIG. 4 shows the results of analyzing the sweetness sub-attributes of Example 2 (test 2), relative to sugar;

FIG. 5 shows the results of analyzing the sweetness sub-attributes of Example 3 (test 3), relative to sugar;

FIG. 6 shows the results of analyzing the sweetness sub-attributes of Example 4 (test 4), relative to sugar;

FIG. 7 shows the results of the protein off-flavor intensity of Example 5 (soy protein), Example 6 (rice protein), Example 7 (corn protein), Example 8 (fermented cereal protein), Example 9 (pea protein isolate), and Example 10 (broad bean protein);

FIG. 8 shows the results of the off-taste/off-flavor intensity and persistence of Example 11 (fat and oil not applied), Example 12 (sunflower oil added alone), Example 13 (canola oil added alone), Example 14 (refined palm oil added alone), Example 15 (a mixture of sunflower oil + refined palm oil added), and Example 16 (a mixture of canola oil + refined palm oil added);

FIG. 9 shows a schematic illustration of Process 1 of preparing a protein-comprising beverage, the process comprising a vacuum concentration process;

FIG. 10 shows a schematic illustration of a process (Process 2) of preparing a protein-comprising beverage of the present disclosure, the process comprising a primary homogenization process without a vacuum concentration process, thereby performing the homogenization process twice in total;

FIG. 11 shows the results of the off-taste/off-flavor intensity according to the presence or absence of a vacuum concentration process in a process of preparing protein-comprising beverages of Example 17 (comprising fermented cereal protein + sunflower oil), Example 14 (comprising rice protein + refined palm oil), and Example 18 (comprising rice protein + refined palm oil + aroma);

FIG. 12 shows the results of the viscosity and sedimentation rate of Example 14 (thickener not applied), Example 19 (pectin), Example 20 (guar gum), Example 21 (xanthan gum), and Example 22 (carrageenan);

FIG. 13 shows the results of the off-taste/off-flavor and sedimentation rate of Example 14 (acidity regulator not applied), Example 23 (sodium citrate), Example 24 (comprising sodium citrate + carrageenan), Example 25 (sodium bicarbonate), and Example 26 (comprising sodium bicarbonate + carrageenan);

FIG. 14 shows a schematic illustration of Process 3 of preparing a protein-comprising beverage, the process not comprising a primary homogenization process after mixing raw materials, thereby performing the homogenization process once in total;

FIG. 15 shows the results of the mouthfeel of Example 22 (pre-homogenization added), Example 24 (sodium citrate + pre-homogenization added), and Example 26 (sodium bicarbonate + pre-homogenization added) prepared by Process 2 of performing the homogenization process twice in total, and Example 22 (homogenized), Example 24 (sodium citrate), and Example 26 (sodium bicarbonate) prepared by Process 3 of performing the homogenization process once;

FIG. 16 shows the results of the degree of separation and the sedimentation rate after a primary centrifugation of Example 22 (pre-homogenization added), Example 24 (sodium citrate + pre-homogenization added), and Example 26 (sodium bicarbonate + pre-homogenization added) prepared by Process 2 of performing the homogenization process twice in total, and Example 22 (homogenized), Example 24 (sodium citrate), and Example 26 (sodium bicarbonate) prepared by Process 3 of performing the homogenization process once; and

FIG. 17 shows the results of the degree of separation and the sedimentation rate after a secondary centrifugation of Example 22 (pre-homogenization added), Example 24 (sodium citrate + pre-homogenization added), and Example 26 (sodium bicarbonate + pre-homogenization added) prepared by Process 2 of performing the homogenization process twice in total, and Example 22 (homogenized), Example 24 (sodium citrate), and Example 26 (sodium bicarbonate) prepared by Process 3 of performing the homogenization process once.

**[Detailed Description of Preferred Embodiments]**

The present disclosure will be described in detail as follows. Meanwhile, each description and embodiment disclosed in this disclosure may also be applied to other descriptions and embodiments. That is, all combinations of various elements disclosed in this disclosure fall within the scope of the present disclosure. Further, the scope of the present disclosure is not limited by the specific description described below. Further, a number of papers and patent documents are referenced and cited throughout this specification. The disclosures of the cited papers and patent documents are incorporated herein by reference in their entirety to further clarify the level and scope of the subject matter to which the present disclosure pertains.

An aspect of the present disclosure provides a protein-comprising food composition comprising 3% by weight to 15% by weight of a sweetener, 5% by weight to 15% by weight of a protein, 0.1% by weight to 2% by weight of fat and oil, 0.01% by weight to 0.1% by weight of a thickener, 0.05% by weight to 0.5% by weight of an acidity regulator, and 0.01% by weight to 0.1% by weight of an emulsifier, based on 100% by weight of the total food composition.

In recent years, as consumers' need to consume sufficient protein for health has increased, ready-to-drink (RTD) products that are more convenient for consumers to consume, such as products with high contents of animal-based protein or a mixture of animal- and plant-based proteins or products with lower calories by reducing sugar, are being marketed.

However, when actually drinking the beverage products on the market, the higher the protein content, the stronger the off-flavor unique to protein, and in many beverage products, rather strong flavors and aromas, such as chocolate, etc., are used in order to mask the off-flavor. In addition, most beverage products with a high protein content are rather thick to drink, and thus the mouthfeel is not smooth but chalky, or there is an inconvenience of having to shake the beverage products before drinking, due to the protein sedimentation. In addition, protein-comprising beverages with reduced sugar also have a disadvantage of being overly sweet or leaving a lingering aftertaste after drinking the beverage due to the use of high-sweeteners to replace sugar.

Accordingly, the present disclosure has an excellent effect that a vegan protein-comprising sugar-free beverage may be prepared, in which sugar is reduced by using a sweetener while maintaining sweetness that is as refreshing as sugar, without leaving a lingering aftertaste, off-flavor of protein and fat and oil is minimized by adding a plant-based protein and vegetable fat and oil at an optimal blending ratio, mouthfeel (softness) is improved by adding a thickener with excellent flowability, sedimentation is minimized by adding an acidity regulator and by introducing a secondary homogenization process, and flavor is maximized by excluding a vacuum concentration process.

In particular, in the vegan protein-comprising sugar-free beverage of the present disclosure, traditional plant-based protein and vegetable fat and oil are added as vegan ingredients. However, in the existing products, rather strong flavor and aroma, such as chocolate, etc. are added to mask the strong off-flavor unique to protein. In contrast, in the present disclosure, plant-based protein and vegetable fat and oil with low off-taste/off-flavor are added at an optimal blending ratio to minimize the off-flavor unique to protein, and a sweetener that implements sweetness similar to sugar is used at an optimal blending ratio, instead of sugar, thereby preparing a sugar-free protein beverage with reduced sugar. Further, the vegan protein-comprising sugar-free beverage of the present disclosure may be a sugar-free protein beverage with improved mouthfeel and sedimentation, as compared to traditional protein-rich beverages that have a chalky, not smooth, mouthfeel due to a rather thick texture, by deriving an optimal blending ratio of the aforementioned plant-based protein and vegetable fat and oil, and the sweetener.

The protein-comprising food composition of the present disclosure may comprise about 3% by weight to about 15% by weight of a sweetener, about 5% by weight to about 15% by weight of a protein, about 0.1% by weight to about 2% by weight of fat and oil, about 0.01% by weight to about 0.1% by weight of a thickener, about 0.05% by weight to about 0.5% by weight of an acidity regulator, and about 0.01% by weight to about 0.1% by weight of an emulsifier, based on 100% by weight of the total food composition.

In the present disclosure, the sweetener of the present disclosure may comprise, without limitation, any sweetener known in the art, and examples thereof may comprise allulose, stevia, enzymatically modified stevia, steviol glycoside, sucralose, aspartame, etc. For example, the sweetener of the present disclosure may be allulose and/or steviol glycoside.

The sweetener may be comprised in a range consisting of, for example, a lower limit selected from about 3% by weight or more, about 4% by weight or more, about 5% by weight or more, about 6% by weight or more, and about 7% by weight or more, and/or an upper limit selected from about 15% by weight or less, about 13% by weight or less, about 11% by weight or less, about 10% by weight or less, and about 9% by weight or less.

The sweetener of the present disclosure may be two or more selected from the aforementioned sweeteners.

When the sweetener comprises two kinds of sweeteners, for example, a first sweetener is comprised in a range consisting of, for example, a lower limit selected from about 2% by weight or more, about 3% by weight or more, about 4% by weight or more, about 5% by weight or more, and about 6% by weight or more, and/or an upper limit selected from about 14% by weight or less, about 12% by weight or less, about 10% by weight or less, about 8% by weight or less, and about 7% by weight or less, and a second sweetener is comprised in a range consisting of, for example, a lower limit selected from about 0.005% by weight or more, about 0.0075% by weight or more, about 0.01% by weight or more, about 0.015% by weight or more, and about 0.0175% by weight or more, and/or an upper limit selected from about 0.1% by weight or less, about 0.08% by weight or less, about 0.06% by weight or less, about 0.04% by weight or less, and about 0.03% by weight or less.

The blending ratio of the two kinds of sweeteners according to the present disclosure may exhibit sweetness equivalent to sugar.

By adding two or more of the sweeteners to the protein-comprising food composition of the present disclosure, the protein-comprising food composition exhibits sweetness with a refreshing taste equivalent to sugar, thereby reducing the sugar content while leaving no lingering aftertaste.

In the present disclosure, the protein-comprising food composition of the present disclosure may further comprise a sugar alcohol for additional sugar reduction. The sugar alcohol of the present disclosure may comprise, without limitation, any sugar alcohol known in the art, and examples thereof may comprise, but are not limited to, erythritol, maltitol, xylitol, sorbitol, etc.

In the present disclosure, the protein of the present disclosure may be a plant-based protein. The plant-based protein of the present disclosure may comprise, without limitation, any plant-based protein known in the art, and examples thereof may comprise soy protein, rice protein, corn protein, fermented cereal protein, pea protein isolate, broad bean protein, etc. For example, the protein of the present disclosure may be rice protein.

The protein may be comprised in a range consisting of, for example, a lower limit selected from about 5% by weight or more, about 6% by weight or more, about 7% by weight or more, about 8% by weight or more, and about 9% by weight or more, and/or an upper limit selected from about 15% by weight or less, about 14% by weight or less, about 13% by weight or less, about 12% by weight or less, and about 11% by weight or less.

By adding the protein to the food composition of the present disclosure, a food composition or food with a high protein content may be prepared. The protein-comprising food composition of the present disclosure or a food prepared therefrom may comprise the protein in an amount of about 10 g/mL to about 15 g/mL. The protein comprised in the food composition or the food prepared therefrom may be in a range consisting of a lower limit selected from about 10 g/mL or more, about 11 g/mL or more, about 12 g/mL or more, and about 12.5 g/mL or more and/or an upper limit selected from about 15 g/mL or less, about 14 g/mL or less, about 13 g/mL or less, and about 12.5 g/mL or less.

In the present disclosure, the fat and oil of the present disclosure may be vegetable fat and oil. The vegetable fat and oil of the present disclosure may comprise, without limitation, any vegetable fat and oil known in the art, and examples thereof may comprise refined palm oil, sunflower oil, canola oil, etc. For example, the fat and oil of the present disclosure may be refined palm oil.

The fat and oil may be comprised in a range consisting of, for example, a lower limit selected from about 0.1% by weight or more, about 0.3% by weight or more, about 0.6% by weight or more, about 0.8% by weight or more, and about 0.9% by weight or more, and/or an upper limit selected from about 2% by weight or less, about 1.7% by weight or less, about 1.5% by weight or less, about 1.3% by weight or less, and about 1.1% by weight or less.

By adding the fat and oil to the food composition of the present disclosure, a food composition or food having a body feeling similar to milk may be prepared.

In one embodiment, the food composition of the present disclosure may be a vegan food from which animal-based protein and/or animal fat and oil are excluded.

In the present disclosure, the thickener of the present disclosure may comprise, without limitation, any thickener known in the art, and examples thereof may comprise carrageenan, pectin, guar gum, xanthan gum, etc. For example, the thickener of the present disclosure may be carrageenan.

The thickener may be comprised in a range consisting of, for example, a lower limit selected from about 0.01% by weight or more, about 0.02% by weight or more, about 0.03% by weight or more, about 0.04% by weight or more, and about 0.045% by weight or more, and/or an upper limit selected from about 0.1% by weight or less, about 0.09% by weight or less, about 0.08% by weight or less, about 0.07% by weight or less, and about 0.06% by weight or less.

By adding the thickener to the food composition of the present disclosure, a soft mouthfeel may be provided to the food composition of the present disclosure with a high protein content, and protein sedimentation may be prevented, thereby minimizing the inconvenience of having to shake or to mix the contents before consumption.

In the present disclosure, the acidity regulator of the present disclosure may comprise, without limitation, any acidity regulator known in the art, and examples thereof may comprise sodium bicarbonate, sodium citrate, etc. For example, the acidity regulator of the present disclosure may be sodium bicarbonate.

The acidity regulator may be comprised in a range consisting of, for example, a lower limit selected from about 0.05% by weight or more, about 0.06% by weight or more, about 0.07% by weight or more, about 0.08% by weight or more, and about 0.09% by weight or more, and/or an upper limit selected from about 0.5% by weight or less, about 0.4% by weight or less, about 0.3% by weight or less, about 0.2% by weight or less, and about 0.15% by weight or less.

By adding the acidity regulator to the food composition of the present disclosure, proteins that have the characteristic of being vulnerable to heat and acid may be stabilized, thereby minimizing protein denaturation caused by the addition of acidic raw materials or high-temperature sterilization processes, etc.

In the present disclosure, the emulsifier of the present disclosure may comprise, without limitation, any emulsifier known in the art, and examples thereof may comprise lecithin, sucrose fatty acid ester, glycerin fatty acid ester, etc. For example, the emulsifier of the present disclosure may be lecithin.

The emulsifier may be comprised in a range consisting of, for example, a lower limit selected from about 0.01% by weight or more, about 0.02% by weight or more, about 0.03% by weight or more, about 0.04% by weight or more, and about 0.045% by weight or more, and/or an upper limit selected from about 0.1% by weight or less, about 0.09% by weight or less, about 0.08% by weight or less, about 0.07% by weight or less, and about 0.06% by weight or less.

The above sweetener, protein, fat and oil, thickener, acidity regulator, emulsifier, and sugar alcohol may be purchased from a commercially available source for use.

In addition, the above sweetener, protein, fat and oil, thickener, acidity regulator, emulsifier, and sugar alcohol may be those for foods.

As used herein, the term "about" may be presented before a particular numerical value. The term "about" used herein comprises not only the exact number recited after the term, but also a range that is near or close to that number. Considering the context in which the number is presented, it may be determined whether any number is close to or near the particular number presented. In one example, the term "about" may refer to a range from -10% to +10% of a numerical value. In another example, the term "about" may refer to a range from -5% to +5% of a given numerical value, but is not limited thereto.

In one specific embodiment, the protein-comprising food composition of the present disclosure may be prepared by performing a homogenization process after mixing the aforementioned raw materials.

The homogenization may be performed at about 50°C to about 80°C for about 1 minute to about 30 minutes under a pressure of about 150 bar to about 350 bar.

The homogenization may be performed in a pressure range of about 150 bar to about 350 bar. For example, the pressure may be in a pressure range consisting of an upper limit selected from about 350 bar or less, about 300 bar or less, about 250 bar or less, about 200 bar or less, about 180 bar or less, and about 160 bar or less.

The homogenization may be performed in a temperature range of about 50°C to about 80°C. For example, the temperature may be in a temperature range consisting of a lower limit selected from about 50°C or higher, about 54°C or higher, about 58°C or higher, about 62°C or higher, about 66°C or higher, and about 68°C or higher.

The homogenization may be performed in a time range of about 1 minute to about 30 minutes. For example, the time may be in a time range consisting of a lower limit selected from about 1 minute or more, about 3 minutes or more, about 6 minutes or more, about 9 minutes or more, about 12 minutes or more, and about 14 minutes, and/or an upper limit selected from about 30 minutes or less, about 28 minutes or less, about 26 minutes or less, about 24 minutes or less, about 22 minutes or less, and about 21 minutes or less. The homogenization according to the present disclosure is performed by a high pressure pushing method, and the homogenization time may vary depending on the amount of the mixture, and may be performed in a time range appropriately arbitrarily selected by those skilled in the art.

In another specific embodiment, the protein-comprising food composition of the present disclosure may be prepared by cooling the composition which has been subjected to the homogenization process and then further performing the homogenization process.

The homogenization may be performed at 50°C to 80°C for 1 minute to 30 minutes under a pressure of 150 bar to 350 bar.

The homogenization may be performed in a pressure range of about 150 bar to about 350 bar. For example, the pressure may be in a pressure range consisting of a lower limit selected from about 150 bar or more, about 200 bar or more, about 220 bar or more, about 240 bar or more, about 260 bar or more, and about 280 bar or more, and/or an upper limit selected from about 350 bar or less, about 340 bar or less, about 330 bar or less, about 320 bar or less, and about 310 bar or less.

The homogenization may be performed at a temperature range of about 50°C to about 80°C. For example, the temperature may be in a temperature range consisting of a lower limit selected from about 50°C or higher, about 52°C or higher, about 54°C or higher, about 56°C or higher, about 58°C or higher, and about 59°C or higher, and/or an upper limit selected from about 80°C or lower, about 78°C or lower, about 76°C or lower, about 74°C or lower, about 72°C or lower, about 71°C or lower.

The homogenization may be performed in a time range of about 1 minute to about 30 minutes. For example, the time may be in a time range consisting of a lower limit selected from about 1 minute or more, about 3 minutes or more, about 6 minutes or more, about 9 minutes or more, about 12 minutes or more, and about 14 minutes or more, and/or an upper limit selected from about 30 minutes or less, about 28 minutes or less, about 26 minutes or less, about 24 minutes or less, about 22 minutes or less, and about 21 minutes or less. The homogenization according to the present disclosure is performed by a high pressure pushing method, and the homogenization time may vary depending on the amount of the mixture, and may be performed in a time range appropriately arbitrarily selected by those skilled in the art.

As one preparation example of the present disclosure according to the above-described embodiments, the protein-comprising food composition of the present disclosure may be a mixture selected by measuring the sugar content and pH after the cooling.

In one specific embodiment, the selected mixture may have a sugar content of 15 Brix to 18 Brix. For example, the sugar content may be in a range consisting of a lower limit selected from about 15 Brix or more, about 15.5 Brix or more, about 16 Brix or more, and about 16.2 Brix or more, and/or an upper limit selected from about 18 Brix or less, about 17.5 Brix or less, about 17 Brix or less, and about 16.8 Brix or less.

In another specific embodiment, the selected mixture may have a pH of 6.5 to 7.0. For example, the pH may be in a range consisting of a lower limit selected from about 6.5 or more, about 6.6 or more, and about 6.7 or more, and/or an upper limit selected from about 7.0 or less, about 6.9 or less, and about 6.8 or less.

As one preparation example of the present disclosure according to the above-described embodiments, the protein-comprising food composition of the present disclosure may be prepared by performing a secondary homogenization process.

In the protein-comprising food composition of the present disclosure prepared by performing the secondary homogenization process, the degree of sedimentation (degree of separation) relative to the total amount of beverage and the degree of sedimentation (sedimentation rate) relative to the solid content in the beverage are improved, as compared to a protein-comprising food composition prepared by not performing the homogenization process or by performing only the primary homogenization process, and accordingly, the sedimentation rate is lowered, and as compared to the commercially available protein-comprising food composition, the sedimentation is improved even when left for a long time, thereby minimizing the inconvenience of having to shake or to mix the contents before consumption.

As one preparation example of the present disclosure according to the above-described embodiments, the protein-comprising food composition of the present disclosure may be prepared without performing a concentration process. The concentration process may be, for example, a vacuum concentration process which is performed under reduced pressure conditions, but is not limited thereto.

The protein-comprising food composition of the present disclosure which is prepared without performing the concentration process may have the improved sensory quality by maintaining flavor unique to the raw material, as compared to a protein-comprising food composition prepared by performing a concentration process (e.g., a vacuum concentration process). The flavor unique to the raw material is a concept distinct from off-flavor that may cause discomfort when consuming food, and may be a flavor unique to the raw material that stimulates the appetite.

In the present disclosure, the protein-comprising food composition of the present disclosure may further comprise 0.1% by weight to 0.5% by weight of a flavoring agent, based on 100% by weight of the total food composition. The flavoring agent of the present disclosure may comprise, without limitation, any food flavoring agent known in the art. The flavoring agent may comprise natural flavoring agents, synthetic flavoring agents, and mixtures thereof, etc., but is not limited thereto.

In addition, the flavoring agent may comprise nut flavor, grain flavor, vanilla flavor, chocolate flavor, coffee flavor, fruit flavor, nut flavor (e.g., walnut flavor, almond flavor, etc.), grain flavor (e.g., barley flavor, brown rice flavor, black bean flavor, etc.), but is not limited thereto, and may be appropriately arbitrarily selected by those skilled in the art for use.

The flavoring agent may be comprised in a range consisting of, for example, a lower limit selected from about 0.1% by weight or more, about 0.15% by weight or more, about 0.2% by weight or more, about 0.25% by weight or more, and about 0.27% by weight or more, and/or an upper limit selected from about 0.5% by weight or less, about 0.45% by weight or less, about 0.4% by weight or less, about 0.35% by weight or less, and about 0.33% by weight or less.

In the present disclosure, the protein-comprising food composition of the present disclosure may further comprise 80% by weight to 85% by weight of purified water, based on 100% by weight of the total food composition.

The purified water may be comprised in a range consisting of, for example, a lower limit selected from about 80% by weight or more, about 81% by weight or more, about 82% by weight or more, about 83% by weight or more, and about 84% by weight or more, and/or an upper limit selected from about 85% by weight or less, about 84% by weight or less, about 83% by weight or less, about 82% by weight or less, and about 81% by weight or less.

The "food" of the present disclosure may comprise all types of general foods, functional foods, nutritional supplements, health foods, and food additives, etc.

The above type of food may be prepared into various forms according to common methods known in the art.

The food comprises forms such as pills, powders, granules, infusions, tablets, capsules, powders or liquids, etc., and foods to which the composition of the present disclosure may be added may comprise, for example, various foods, such as rice, edible grain flour (edible grain powder), grain soup, rice bowl, noodles, rice soup, instant rice, seasoning, lunch box rice, dried cooked rice, bread, edible sugar, rice cake, bibimjang, sauce, spice, edible salt, seasoning, seasoning powders, processed, frozen, dried and cooked fruits and vegetables, jellies, jams, compotes, eggs, milk and other dairy products, edible oils and fats, coffee, cocoa and coffee substitutes, tapioca, grain flour and grain preparations, ramen, udon, noodles, noodle soup, cold noodles, porridge, soup, soup dishes, instant foods, frozen foods, instant foods, retort foods, other beverages, chewing gum, tea, vitamin complex, health supplements, etc., but is not limited thereto.

In one embodiment, the protein-comprising food composition of the present disclosure may be a beverage (Ready-to-Drink, RTD).

As ingredients that may be comprised in the food of the present disclosure, various herbal extracts, food auxiliary additives, or natural carbohydrates may be comprised as additional ingredients, like in general foods. Further, the food auxiliary additives may comprise food auxiliary additives common in the art, for example, flavoring agents, savory agents, coloring agents, fillers, stabilizers, etc.

Examples of the natural carbohydrates comprise monosaccharides, for example, glucose, fructose, etc.; disaccharides, for example, maltose, sucrose, etc.; and polysaccharides, for example, common sugars such as dextrins, cyclodextrins, etc., and sugar alcohols such as maltitol, xylitol, sorbitol, erythritol, etc. In addition to those described above, natural flavors (e.g., rebaudioside A, glycyrrhizin, etc.) and synthetic flavors (saccharin, aspartame, etc.) may be advantageously used as flavoring agents. In addition, common food additives used for the purpose of supplementing taste and nutrition, for example, nucleic acids, amino acids, organic acids, etc., may be added.

In addition to those described above, the food of the present disclosure may comprise various nutrients, vitamins, minerals (electrolytes), flavors such as synthetic flavors and natural flavors, etc., coloring agents and fillers (cheese, chocolate, etc.), pectic acid or salts thereof, alginic acid and salts thereof, organic acids, protective colloidal thickeners, pH regulators, stabilizers, preservatives, glycerin, alcohols, carbonation agents used in carbonated beverages, etc. In addition, the food may comprise fruit flesh for the preparation of natural fruit juices, fruit juice beverages and vegetable beverages. These components may be used independently or in combination.

The food of the present disclosure may be prepared by a method commonly used in the art, and may be prepared by adding raw materials and ingredients commonly added in the art during the preparation. In addition, the formulation of the food may also be prepared without limitation as long as the formulation is recognized as a food.

Further, when the food of the present disclosure is used as a health functional food, the food of the present disclosure may be prepared in various types of formulations, and unlike general medicines, since the food is used as a raw material, there are advantages of being free from side effects that may occur when taken for a long period of time, and of being highly portable, and therefore, the food of the present disclosure may be ingested as a supplement.

Meanwhile, the food of the present disclosure may also comprise flavoring agents, savory agents, coloring agents, fillers, stabilizers, and flavors which may also be classified as food additives.

As used herein, the term 'flavor' may be a material added to enhance the flavor of food. The flavor may be a material that allows foods to have excellent seasoning property.

The flavor may be divided according to taste components. In other words, according to the taste, the flavor may be divided into neutral flavor, beef flavor, chicken flavor, pork flavor, kokumi flavor, etc.

The 'kokumi flavor' means a flavor that releases the flavor of kokumi, and the 'kokumi' is a Japanese word, and may also be expressed as 'mouthfulness', 'continuity', 'thickness', and 'heartiness' in English, and expressed as 'rich taste', 'thick taste', 'mouth-filling taste', 'dense taste', 'sticky taste', etc. in Korean. The 'neutral flavor' refers to a flavor that maximizes 'umami' and minimizes other flavors to produce a mild and clean flavor. For example, oils such as canola oil or grapeseed oil among oils may be acknowledged as having a neutral flavor. The term 'seasoning property' may mean to have a sour, sweet, salty, bitter, or umami taste, but is not limited thereto.

Another aspect of the present disclosure provides a method of preparing the protein-comprising food, the method comprising the steps of a) preparing a mixture by mixing 3% by weight to 15% by weight of the sweetener, 5% by weight to 15% by weight of the protein, 0.1% by weight to 2% by weight of fat and oil, 0.01% by weight to 0.1% by weight of the thickener, 0.05% by weight to 0.5% by weight of the acidity regulator, and 0.01% by weight to 0.1% by weight of the emulsifier; b) homogenizing and then cooling the mixture; and c) further homogenizing and cooling the cooled mixture.

In the method of the present disclosure, the step a) may be preparing the mixture by mixing 3% by weight to 15% by weight of the sweetener, 5% by weight to 15% by weight of the protein, 0.1% by weight to 2% by weight of fat and oil, 0.01% by weight to 0.1% by weight of the thickener, 0.05% by weight to 0.5% by weight of the acidity regulator, and 0.01% by weight to 0.1% by weight of the emulsifier.

In the present disclosure, the mixture of the step a) may comprise 3% by weight to 15% by weight of the sweetener, 5% by weight to 15% by weight of the protein, 0.1% by weight to 2% by weight of fat and oil, 0.01% by weight to 0.1% by weight of the thickener, 0.05% by weight to 0.5% by weight of the acidity regulator, and 0.01% by weight to 0.1% by weight of the emulsifier, based on 100% by weight of the total food to be finally prepared, which are as described above.

The sweetener may be allulose, stevia, enzymatically modified stevia, steviol glycoside, sucralose, aspartame, etc., for example, allulose and/or steviol glycoside, which are as described above.

The protein may be a plant-based protein. The plant-based protein may be soy protein, rice protein, corn protein, fermented cereal protein, pea protein isolate, broad bean protein, etc., for example, rice protein, which is as described above.

The fat and oil may be vegetable fat and oil. The vegetable fat and oil may be refined palm oil, sunflower oil, canola oil, etc., for example, refined palm oil, which is as described above.

The thickener may be carrageenan, pectin, guar gum, xanthan gum, etc., for example, carrageenan, which is as described above.

The acidity regulator may be sodium bicarbonate, sodium citrate, etc., for example, sodium bicarbonate, which is as described above.

The emulsifier may be lecithin, sucrose fatty acid ester, glycerin fatty acid ester, etc., for example, lecithin, which is as described above.

The composition of the step a) may be in the form of a liquid.

In the method of the present disclosure, the step b) may be cooling the mixture of the step a) after homogenization.

The homogenization may be performed at about 50°C to about 80°C for about 1 minute to about 30 minutes under a pressure of about 150 bar to about 350 bar.

The homogenization may be performed in a pressure range of about 150 bar to about 350 bar. For example, the pressure may be in a pressure range consisting of an upper limit selected from about 350 bar or less, about 300 bar or less, about 250 bar or less, about 200 bar or less, about 180 bar or less, and about 160 bar or less.

The homogenization may be performed at a temperature range of about 50°C to about 80°C. For example, the temperature may be in a temperature range consisting of a lower limit selected from about 50°C or higher, about 54°C or higher, about 58°C or higher, about 62°C or higher, about 66°C or higher, and about 68°C or higher.

The homogenization may be performed in a time range of about 1 minute to about 30 minutes. For example, the time may be in a time range consisting of a lower limit selected from about 1 minute or more, about 3 minutes or more, about 6 minutes or more, about 9 minutes or more, about 12 minutes or more, and about 14 minutes, and/or an upper limit selected from about 30 minutes or less, about 28 minutes or less, about 26 minutes or less, about 24 minutes or less, about 22 minutes or less, and about 21 minutes or less.

This is as described above.

The cooling may be performed by a method known in the art, and is not particularly limited.

For example, the cooling may be performed until the temperature of the mixture reaches about 10°C or lower.

In the method of the present disclosure, the step c) may be additionally homogenizing and cooling the cooled mixture.

The homogenization may be performed at 50°C to 80°C for 1 minute to 30 minutes under a pressure of 150 bar to 350 bar.

The homogenization may be performed in a pressure range of about 150 bar to about 350 bar. For example, the pressure may be in a pressure range consisting of a lower limit selected from about 150 bar or more, about 200 bar or more, about 220 bar or more, about 240 bar or more, about 260 bar or more, and about 280 bar or more, and/or an upper limit selected from about 350 bar or less, about 340 bar or less, about 330 bar or less, about 320 bar or less, and about 310 bar or less.

The homogenization may be performed in a temperature range of about 50°C to about 80°C. For example, the temperature may be in a temperature range consisting of a lower limit selected from about 50°C or higher, about 52°C or higher, about 54°C or higher, about 56°C or higher, about 58°C or higher, and about 59°C or higher, and/or an upper limit selected from about 80°C or lower, about 78°C or lower, about 76°C or lower, about 74°C or lower, about 72°C or lower, and about 71°C or lower.

The homogenization may be performed in a time range of about 1 minute to about 30 minutes. For example, the time may be in a time range consisting of a lower limit selected from about 1 minute or more, about 3 minutes or more, about 6 minutes or more, about 9 minutes or more, about 12 minutes or more, and about 14 minutes, and/or an upper limit selected from about 30 minutes or less, about 28 minutes or less, about 26 minutes or less, about 24 minutes or less, about 22 minutes or less, and about 21 minutes or less.

This is as described above.

The cooling may be performed by a method known in the art, and is not particularly limited.

For example, the cooling may be performed until the temperature of the mixture reaches about 20°C to about 30°C.

In one embodiment, the method of the present disclosure may comprise selecting the mixture by measuring the sugar content and pH of the cooled mixture prior to the step c).

In one specific embodiment, the selected mixture may have a sugar content of 15 Brix to 18 Brix. For example, the sugar content may be in a range consisting of a lower limit selected from about 15 Brix or more, about 15.5 Brix or more, about 16 Brix or more, and about 16.2 Brix or more, and/or an upper limit selected from about 18 Brix or less, about 17.5 Brix or less, about 17 Brix or less, and about 16.8 Brix or less.

In another specific embodiment, the selected mixture may have a pH of 6.5 to 7.0. For example, the pH may be in a range consisting of a lower limit selected from about 6.5 or more, about 6.6 or more, and about 6.7 or more, and/or an upper limit selected from about 7.0 or less, about 6.9 or less, and about 6.8 or less.

This is as described above.

In one embodiment, the method of the present disclosure may further comprise a step of adding a flavoring agent to the cooled mixture prior to the step c). The flavoring agent is as described above.

In another embodiment, the method of the present disclosure may further comprise a step of performing sterilization prior to the cooling after homogenization in the step c). The sterilization may be performed by a known method, and is not particularly limited as long as it is a method of sterilizing a food.

In still another embodiment, the method of the present disclosure may further comprise a step of packaging the cooled mixture after the step c). The packaging may be performed by a known method, and is not particularly limited as long as it is a method of packaging a food.

Still another aspect of the present disclosure provides a protein-comprising food prepared by the method of the present disclosure.

The method is as described above.

In the present disclosure, the food may be a beverage, but is not limited thereto.

In the present disclosure, the food may comprise 10 g/mL to 15 g/mL of protein. This is as described above. However, the present disclosure is not limited thereto, and the protein of the present disclosure may be added to the food composition or food of the present disclosure in an appropriate range in order to achieve the desired protein content by a person skilled in the art.

The food of the present disclosure may be a food in which sugar is reduced by using the sweetener, off-flavor of protein and fat and oil is minimized by adding the plant-based protein and vegetable fat and oil, mouthfeel (softness) is improved by adding the thickener with excellent flowability, sedimentation is minimized by adding the acidity regulator and introducing the secondary homogenization process, and flavor is maximized by excluding the vacuum concentration process, but is not limited thereto.

In one embodiment, the food composition of the present disclosure may be a vegan food from which animal-based protein and/or animal fat and oil are excluded.

**[Mode for Carrying Out the Invention]**

Hereinafter, the present disclosure will be described in more detail by way of exemplary embodiments. However, the following exemplary embodiments are only preferred embodiments for illustrating the present disclosure, and thus are not intended to limit the scope of the present disclosure thereto. Meanwhile, technical matters not described in the present specification may be sufficiently understood and easily implemented by those skilled in the technical field of the present disclosure or similar technical fields.

**Example and Comparative Example: Preparation of Protein-Comprising Beverage**

Example 1 to Example 4, each comprising erythritol (CheilJedang) as a sugar substitute sugar alcohol, and allulose (Samyang Corporation) or steviol glycoside (Daepyung) as a sugar substitute sweetener in order to reduce the sugar content in protein-comprising beverages, soy protein (Brenntag Korea) as protein, and sunflower oil (Cheil Jedang) as fat and oil, and Comparative Example 1 comprising only sugar (CheilJedang) as a saccharide were prepared by adding and mixing raw materials according to Table 1 below.

[Table 1]

| Composition (%wt) | Comparative Example 1 | Example 1 | Example 2 | Example 3 | Example 4 |
|---|---|---|---|---|---|
| **Sugar** | **12** | | | | |
| **Erythritol** | | **10** | **8** | | |
| **Allulose** | | | | **10** | **8** |
| **Steviol glycoside** | | **0.01** | **0.02** | **0.01** | **0.02** |
| Soy protein | 10 | 10 | 10 | 10 | 10 |
| Sunflower oil | 1 | 1 | 1 | 1 | 1 |
| Purified water | 80-85 | 80-85 | 80-85 | 80-85 | 80-85 |
| Total | 100 | 100 | 100 | 100 | 100 |

Next, to prepare protein-comprising beverages in which animal-based protein was excluded, a high content of plant-based protein was comprised, and off-flavor unique to protein was minimized, Example 5 to Example 10 were prepared by adding and mixing raw materials according to Table 2 below as protein-comprising beverages comprising soy protein (Brenntag Korea), rice protein (DH solution), corn protein (Richwood Trading Company), fermented cereal protein (Henanum), pea protein isolate (Charm Goods), or broad bean protein (Sunfood) as the plant-based protein so that the protein content per 250 mL of beverage was 20 g or more, and lecithin as an emulsifier.

[Table 2]

| Composition (%wt) | Example 5 | Example 6 | Example 7 | Example 8 | Example 9 | Example 10 |
|---|---|---|---|---|---|---|
| Allulose | 8 | 8 | 8 | 8 | 8 | 8 |
| Steviol glycoside | 0.02 | 0.02 | 0.02 | 0.02 | 0.02 | 0.02 |
| **Soy protein** | **10** | | | | | |
| **Rice protein** | | **10** | | | | |
| **Corn protein** | | | **10** | | | |

(continued)

| Composition (%wt) | Example 5 | Example 6 | Example 7 | Example 8 | Example 9 | Example 10 |
|---|---|---|---|---|---|---|
| **Fermented cereal protein** | | | | 10 | | |
| **Pea protein isolate** | | | | | 10 | |
| **Broad bean protein** | | | | | | 10 |
| Lecithin | 0.05 | 0.05 | 0.05 | 0.05 | 0.05 | 0.05 |
| Purified water | 80-85 | 80-85 | 80-85 | 80-85 | 80-85 | 80-85 |
| Total | 100 | 100 | 100 | 100 | 100 | 100 |

Next, the protein-comprising beverages were added with fat and oil to give a body feeling similar to that of milk, but the off-flavor of the protein may persist due to the sensory persistence of fat and oil, and therefore, in order to prepare protein-comprising beverages in which animal fat and oil are excluded, and vegetable fat and oil are comprised while minimizing the off-flavor of the protein, Example 11 to Example 16 as protein-comprising beverages comprising sunflower oil (CheilJedang), canola oil (CheilJedang), or refined coconut oil (Lotte Foods) as the vegetable fat and oil were prepared by adding and mixing raw materials according to Table 3 below.

[Table 3]

| Composition (%wt) | Example 11 | Example 12 | Example 13 | Example 14 | Example 15 | Example 16 |
|---|---|---|---|---|---|---|
| Allulose | 8 | 8 | 8 | 8 | 8 | 8 |
| Steviol glycoside | 0.02 | 0.02 | 0.02 | 0.02 | 0.02 | 0.02 |
| Rice protein | 10 | 10 | 10 | 10 | 10 | 10 |
| **Sunflower oil** | | 1 | | | 0.5 | |
| **Canola oil** | | | 1 | | | 0.5 |
| **Refined coconut oil** | | | | 1 | 0.5 | 0.5 |
| Lecithin | 0.05 | 0.05 | 0.05 | 0.05 | 0.05 | 0.05 |
| Purified water | 80-85 | 80-85 | 80-85 | 80-85 | 80-85 | 80-85 |
| Total | 100 | 100 | 100 | 100 | 100 | 100 |

Next, Example 18 was prepared as a protein-comprising beverage comprising a coffee flavor as a flavoring agent in order to add the flavoring agent to the protein-comprising beverage, and Example 17 was prepared as a protein-comprising beverage without a flavoring agent by adding and mixing raw materials according to Table 4 below.

[Table 4]

| Composition (%wt) | Example 17 | Example 14 | Example 18 |
|---|---|---|---|
| Allulose | 8 | 8 | 8 |
| Steviol glycoside | 0.02 | 0.02 | 0.02 |
| **Rice protein** | | 10 | 10 |
| **Fermented cereal protein** | 10 | | |
| **Sunflower oil** | 1 | | |
| **Refined coconut oil** | | 1 | 1 |
| Lecithin | 0.05 | 0.05 | 0.05 |
| Coffee flavor | | | 0.3 |
| Purified water | 80-85 | 80-85 | 80-85 |
| Total | 100 | 100 | 100 |

Next, beverages with a high protein content have an unsmooth mouthfeel and a chalky feeling, or there is the inconvenience of having to shake the beverages before drinking, due to the protein sedimentation. To prevent this, a thickener is added. However, the thickener may exhibit a flowability that is unsuitable for drinking and consumption. Accordingly, in order to examine a natural thickener and its content that show the optimal conditions for drinking and consumption, Example 19 to Example 22 as protein-comprising beverages comprising pectin, guar gum, xanthan gum, or carrageenan as the natural thickener were prepared by adding and mixing raw materials according to Table 5 below.

[Table 5]

| Composition (%wt) | Example 14 | Example 19 | Example 20 | Example 21 | Example 22 |
|---|---|---|---|---|---|
| Allulose | 8 | 8 | 8 | 8 | 8 |
| Steviol glycoside | 0.02 | 0.02 | 0.02 | 0.02 | 0.02 |
| Rice protein | 10 | 10 | 10 | 10 | 10 |
| Refined coconut oil | 1 | 1 | 1 | 1 | 1 |
| **Pectin** | | **0.05** | | | |
| **Guar gum** | | | **0.05** | | |
| **Xanthan gum** | | | | **0.05** | |
| **Carrageenan** | | | | | **0.05** |
| Lecithin | 0.05 | 0.05 | 0.05 | 0.05 | 0.05 |
| Purified water | 80-85 | 80-85 | 80-85 | 80-85 | 80-85 |
| Total | 100 | 100 | 100 | 100 | 100 |

Next, Example 23 to Example 26 as protein-comprising beverages comprising sodium citrate or sodium bicarbonate as an acidity (pH) regulator were prepared by adding and mixing raw materials according to Table 6 below, in order to stabilize the protein and to minimize protein denaturation caused by the addition of acidic raw materials or high-temperature sterilization process, etc., because the protein in the protein-comprising beverage has the characteristic of being vulnerable to heat and acid.

[Table 6]

| Composition (%wt) | Example 14 | Example 23 | Example 24 | Example 25 | Example 26 |
|---|---|---|---|---|---|
| Allulose | 8 | 8 | 8 | 8 | 8 |
| Steviol glycoside | 0.02 | 0.02 | 0.02 | 0.02 | 0.02 |
| Rice protein | 10 | 10 | 10 | 10 | 10 |
| Refined coconut oil | 1 | 1 | 1 | 1 | 1 |
| Carrageenan | | | **0.05** | | **0.05** |
| **Sodium citrate** | | **0.1** | **0.1** | | |
| **Sodium bicarbonate** | | | | **0.1** | **0.1** |
| Lecithin | 0.05 | 0.05 | 0.05 | 0.05 | 0.05 |
| Purified water | 80-85 | 80-85 | 80-85 | 80-85 | 80-85 |
| Total | 100 | 100 | 100 | 100 | 100 |

The protein-comprising beverages of Example 5 to Example 26 were prepared by the following method.

1) Mixing step: The raw materials excluding the flavoring agent were first mixed in a mixing tank at 70°C to 80°C for 10 minutes to 15 minutes.
2) Primary homogenization step: The mixture was subjected to primary homogenization in a high-pressure homogenizer at 70°C to 80°C for 15 minutes to 20 minutes under 150 bar.
3) Cooling step: The homogenized mixture was cooled to 10°C or lower.

4) Specification inspection: The sugar content (Brix) of the cooled mixture was measured using a Brix meter (ATAGO RX5000a), and pH was measured using a pH meter (METTLER TOLEDO). A mixture with a sugar content of 15 Brix to 18 Brix and a pH of 6.5 to 7.0 was selected.

5) Secondary homogenization step: The mixture of which specification inspection was completed was additionally mixed with a flavoring agent, and then subjected to secondary homogenization at 60°C to 70°C for 15 minutes to 20 minutes under 300 bar in a high-pressure homogenizer.

6) Sterilization step: The secondary homogenized mixture was sterilized by ultra-high temperature processing (UHT) at 140°C for 10 seconds.

7) Cooling step: The sterilized mixture was cooled to 25°C.

8) Packaging step: The cooled mixture was packaged by aseptic filling in Tetra Pak.

**Experimental Example**

**Experimental Example 1: Determination of Optimal Blending Ratio of Sugar Substitute Sugar Alcohol and Sweetener through Analysis of Sugar Reduction Rate and Sweetness**

In order to analyze the sugar reduction rate of Example 1 to Example 4 to which the sugar substitute sugar alcohol and the sweetener were added, the sugar content and sugar reduction rate were compared with those of Comparative Example 1, to which only sugar was added.

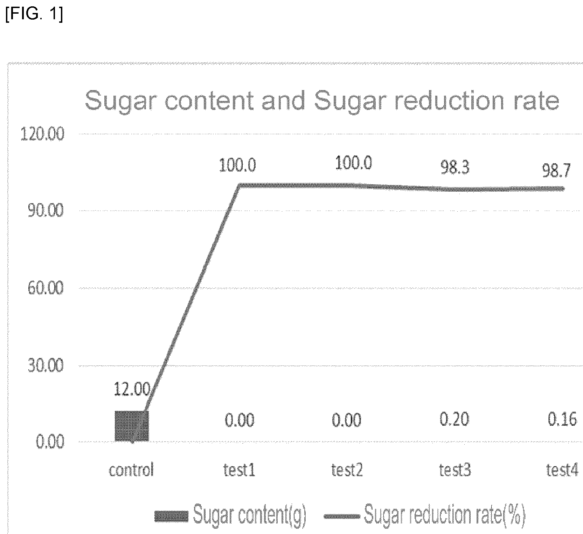

As a result, as shown in Table 7 below and FIG. 1, when erythritol and steviol glycoside were added, the sugar content was reduced by 100%, relative to Comparative Example 1, and when allulose and steviol glycoside were added, the sugar content was reduced by 98% or more, relative to Comparative Example 1.

[Table 7]

|  | Comparative Example 1 | Example 1 | Example 2 | Example 3 | Example 4 |
|---|---|---|---|---|---|
| Sugar reduction rate (%) | 100% (base) | 100.0 | 100.0 | 98.3 | 98.7 |
| Sugar content | 12.00 | 0.00 | 0.00 | 0.20 | 0.16 |

Next, in order to analyze the sweetness of Example 1 to Example 4 and Comparative Example 1, the sweetness similarity and sweetness sub-attributes were compared with those of Comparative Example 1, to which only sugar was added.

In detail, the sensory evaluation for sweetness sub-attributes analysis was conducted on 30 researchers in the institute, and the overall sweetness intensity, initial sweetness, sweetness persistence, body feeling, bitterness, and refreshing taste were evaluated, compared to Comparative Example 1 (control group) comprising only sugar, on a 9-point scale according to the following criteria, and the average value was calculated and then converted to a 5-point scale.

- Intensity: Very strong 9 ~ Strong 7 ~ Moderate 5 ~ Weak 3 ~ Very weak 1
- Similarity: Very similar 9 ~ Similar 7 ~ Moderate 5 ~ Different 3 ~ Very different 1

With regard to sweetness similarity, the sweetness similarity of Examples was evaluated on a 9-point scale, relative to that of sugar (based on 9 points), and the average value was calculated and then converted to a 5-point scale.

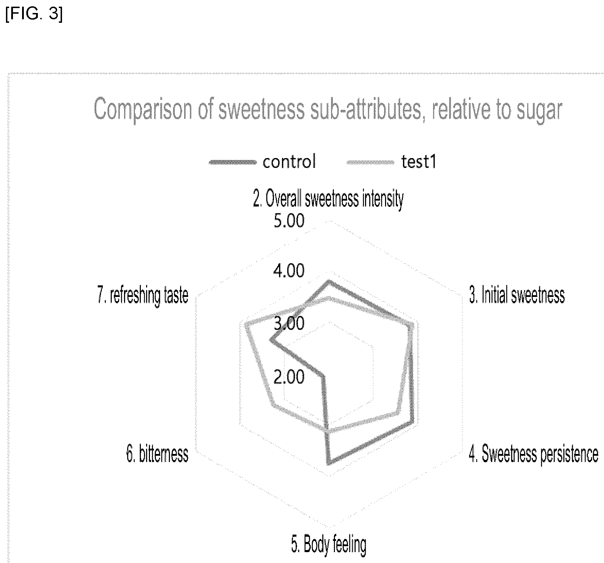

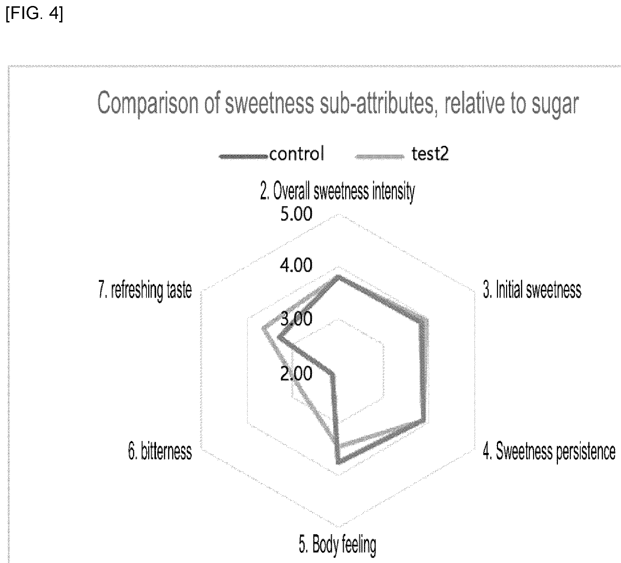

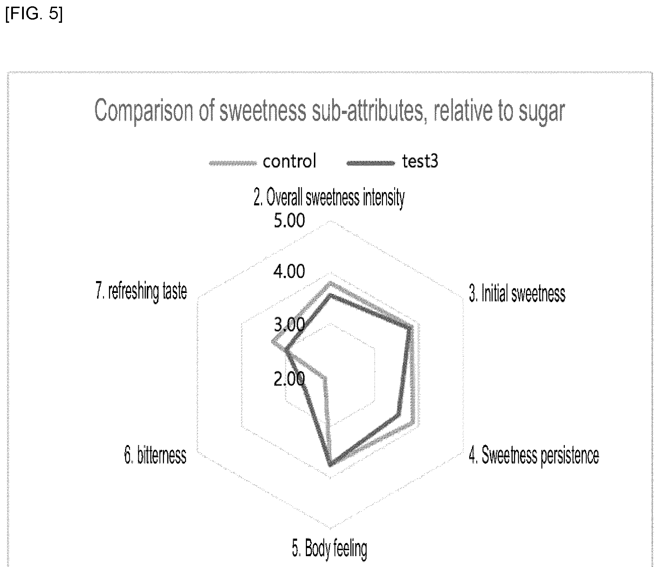

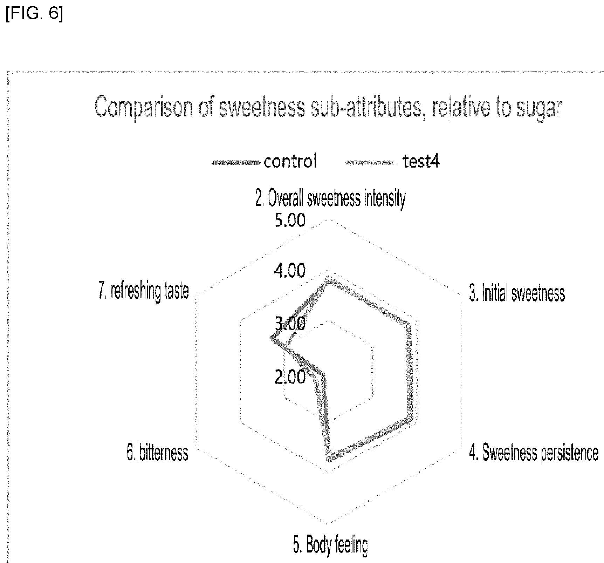

As a result, with regard to Example 1 (FIG. 3) and Example 2 (FIG. 4) to which erythritol and steviol glycoside were added, the sweetness of Example 2, in which the erythritol content was reduced and the steviol glycoside content was increased, was more similar to the sweetness of Comparative Example 1, as compared to that of Example 1. In addition, with regard to Example 3 (FIG. 5) and Example 4 (FIG. 6) to which allulose and steviol glycoside were added, the sweetness of Example 4, in which the allulose content was reduced and the steviol glycoside content was increased, was more similar to the sweetness of Comparative Example 1, as compared to that of Example 3.

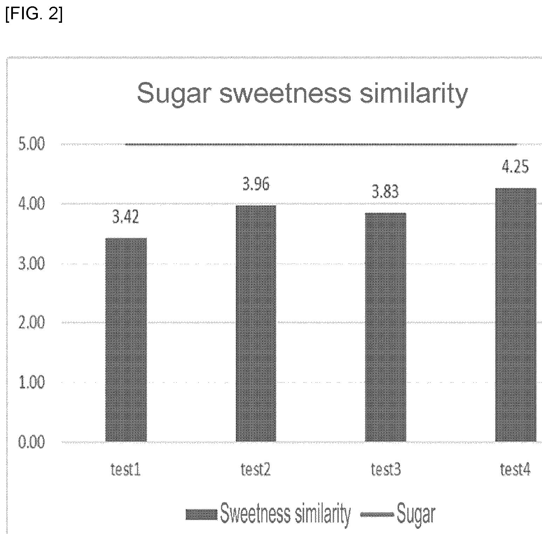

In particular, when erythritol was used, bitterness appeared along with sweetness, showing a significant difference in sweetness when compared to that of sugar, and when allulose was used, the refreshing taste was reduced compared to sugar, but sweetness relatively similar to that of sugar was shown (FIG. 2).

Accordingly, the allulose and steviol glycoside blending condition of Example 4 was selected as being most similar to the sweetness of Comparative Example 1 to which only sugar was added, and the sugar blending condition of Example 4 was maintained in the following Examples.

**Experimental Example 2: Determination of Optimal Blending Ratio of Plant-Based Protein through Measurement of Off-Flavor Intensity**

The protein off-flavor intensity and off-flavor persistence of the protein-comprising beverages of Example 5 to Example 10 were measured through sensory evaluation.

In detail, the sensory evaluation was conducted on 30 researchers in the institute, and the off-flavor intensity of Examples according to each type of the proteins was evaluated on a 9-point scale according to the following criteria, and the average value was calculated and converted to a 5-point scale.

- Intensity: Very strong 9 ~ Strong 7 ~ Moderate 5 ~ Weak 3 ~ Very weak 1

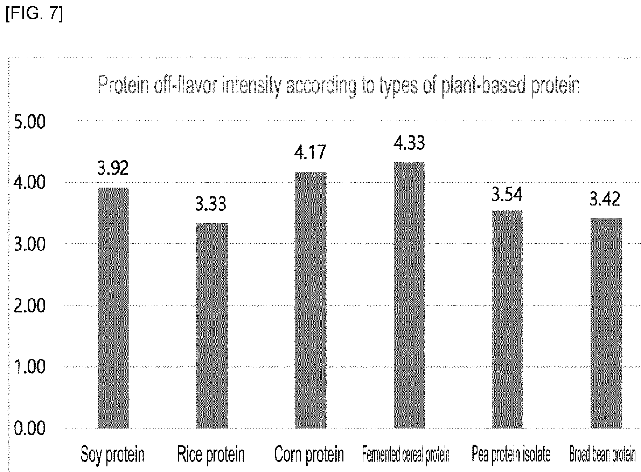

As a result, Example 6 (rice protein) and Example 10 (broad bean protein) showed the lowest off-flavor intensity, and Example 7 (corn protein) and Example 8 (fermented cereal protein) showed rather strong off-flavor (FIG. 7). In addition, it was confirmed that the off-flavor of Example 9 (pea protein isolate) and Example 10 (broad bean protein) was not strong, but its unique flavor persisted until the aftertaste.

Accordingly, it was confirmed that the rice protein blending condition of Example 6 showed the most excellent sensory quality, and therefore, the protein blending condition of Example 6 was maintained in the following Examples.

**Experimental Example 3: Determination of Optimal Blending Ratio of Vegetable Fat and Oil through Measurement of Off-Flavor Intensity**

The protein off-flavor intensity, off-flavor persistence, off-taste intensity, and body feeling of the protein-comprising beverages of Example 11 to Example 16 were measured through sensory evaluation.

In detail, the sensory evaluation was conducted on 30 researchers in the institute, and with regard to the off-flavor intensity of Examples according to each type of fat and oil, initial off-taste/off-flavor and off-taste/off-flavor persistence were evaluated on a 9-point scale according to the following criteria, and the average value was calculated and converted to a 5-point scale. Opinions for the body feeling and physical properties of Examples were collected.

- Intensity: Very strong 9 ~ Strong 7 ~ Moderate 5 ~ Weak 3 ~ Very weak 1

As a result, Example 11 (fat and oil not applied) to which vegetable fat and oil were not added showed the lowest off-flavor caused by protein or fat and oil, but its body feeling like milk was low, indicating low sensory quality.

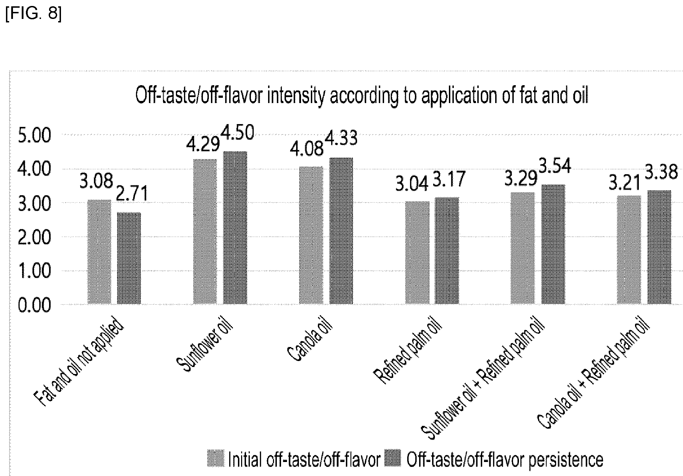

Example 12 (sunflower oil added alone) and Example 13 (canola oil added alone) showed the off-flavors of protein and fat and oil at the same time, and their persistence was high, and in particular, sunflower oil had the strong off-flavor unique to fat and oil (FIG. 8). Example 14 (refined palm oil added alone) showed only the off-flavor of protein without the off-flavor of fat and oil. However, since refined palm oil exists as a solid at room temperature due to its characteristics, the physical properties of the beverage were rather strong, indicating low sensory quality. In the case of Example 15 (a mixture of sunflower oil and refined palm oil added) and Example 16 (a mixture of canola oil and refined palm oil added), the beverages had appropriate physical properties, and the off-flavor intensities of protein and fat and oil were significantly reduced, and Example 16 had the most excellent sensory quality.

Accordingly, refined palm oil, which had the low off-flavor of fat and oil, was added in the following Examples.

**Experimental Example 4: Determination of Optimal Process for Preparation of Protein-Comprising Beverage Comprising Flavoring Agent through Measurement of Off-Flavor Intensity**

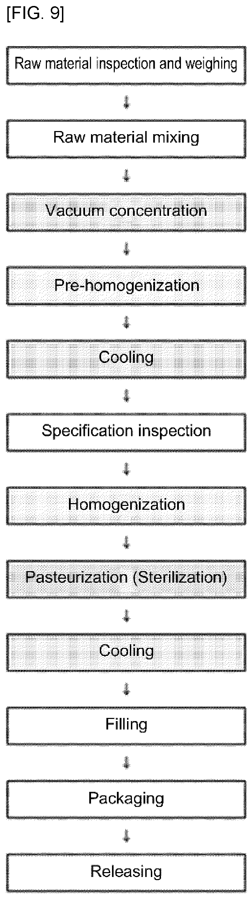

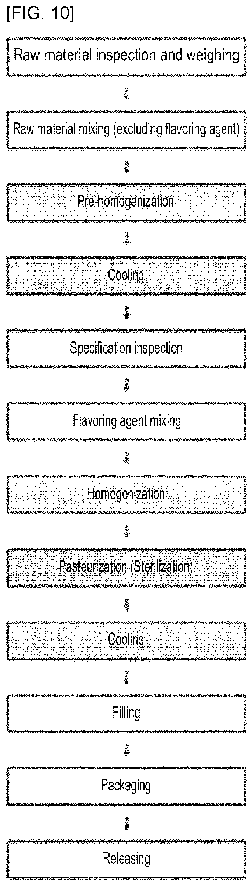

During the preparation of the protein-comprising beverages of Example 17 which was prepared by adding fermented cereal protein that showed the strong protein off-flavor in Experimental Example 2 and sunflower oil that showed the strong fat and oil off-flavor in Experimental Example 3, Example 14 which was prepared by adding rice protein that showed the low protein off-flavor in Experimental Example 2 and refined palm oil that showed the low fat and oil off-flavor in Experimental Example 3, and Example 18 which was prepared by additionally adding a flavoring agent to Example 14, they were prepared according to Process 1 (FIG. 9) comprising a vacuum concentration process (performed at 40°C to 50°C for 20 minutes under a reduced pressure of 3 kgf/cm$^2$ or less in a vacuum concentrator) or Process 2 (FIG. 10) without a vacuum concentration process, and the protein off-flavor intensity of the beverages prepared according to the above process was measured through a sensory evaluation.

The vacuum concentration is a process performed on the principle of lowering the boiling point by lowering the pressure by applying a vacuum in a tank comprising the mixed solution, and is performed when preparing a food comprising substances, which are easily denatured (destruction of nutrients, discoloration, etc.) in the food at high temperatures, thereby extracting nutrients or removing moisture without the denaturation. In detail, the sensory evaluation was conducted on 30 researchers in the institute, and the off-taste/off-flavor intensity according to the vacuum concentration process was evaluated on a 9-point scale according to the following criteria, and the average value was calculated and then converted to a 5-point scale.

- Intensity: Very strong 9 ~ Strong 7 ~ Moderate 5 ~ Weak 3 ~ Very weak 1

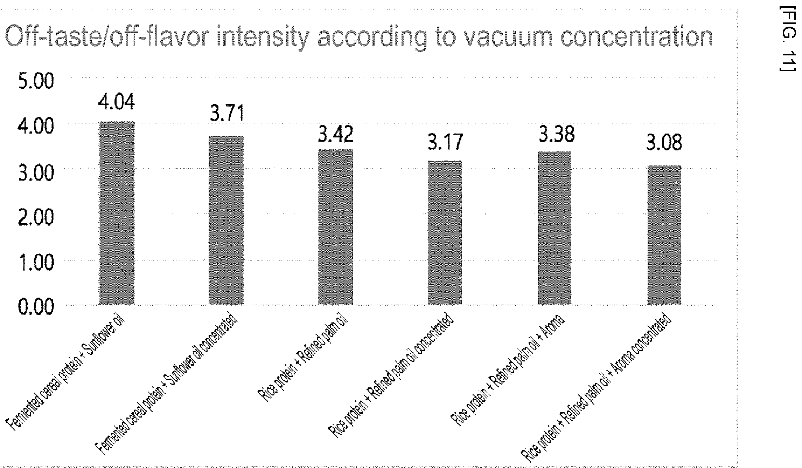

As a result, when the vacuum concentration was performed, the off-flavors of protein and fat and oil were all reduced in Example 17 and Example 14 (FIG. 11).

However, in Example 18, to which the flavoring agent was additionally added, the off-flavor of the flavoring agent also reduced (FIG. 11), indicating that the vacuum concentration process performed upon preparing the protein-comprising beverage with the flavoring agent may have a negative effect on the sensory quality.

**Experimental Example 5: Determination of Optimal Blending Ratio of Thickener through Measurement of Viscosity and Sedimentation Rate**

For protein-comprising beverages of Example 14 and Example 19 to Example 22, the mouthfeel (softness) according to viscosity was measured through a sensory evaluation.

In detail, the sensory evaluation was conducted on 30 researchers in the institute, and the viscosity and mouthfeel according to the type of thickener were evaluated on a 9-point scale according to the following criteria, and the average value was calculated and converted to a 5-point scale.

- Mouthfeel: Very soft 9 ~ Soft 7 ~ Moderate 5 ~ Rough 3 ~ Very rough 1

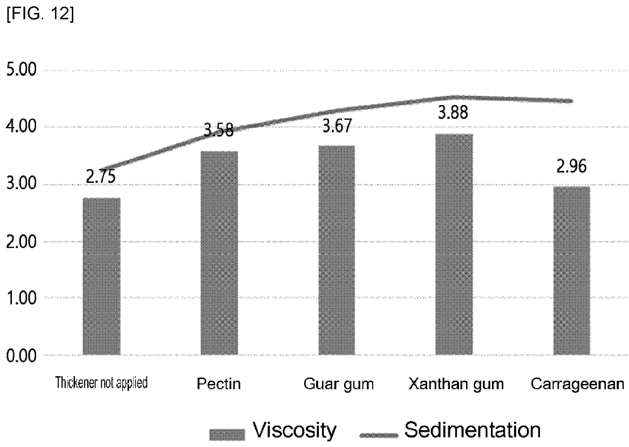

As a result, Example 21 (xanthan gum), Example 20 (guar gum), Example 19 (pectin), Example 22 (carrageenan), and Example 14 (thickener not applied) had strong viscosities in that order. When drinking the beverage of each Example, Example 14 (thickener not applied) had a rough mouthfeel, and Example 21 (xanthan gum), Example 20 (guar gum), and Example 19 (pectin) had poor flowability and were difficult to drink, whereas Example 22 (carrageenan) had improved mouthfeel and good flowability and was easy to drink (FIG. 12).

Next, to evaluate the sedimentation rate of the protein-comprising beverages of Example 14 and Example 19 to Example 22, the sedimentation rate of each Example was visually examined after settling for 1 hour, and at 1 hour immediately after preparation, and evaluated on a 9-point scale according to the following criteria, and the average value was calculated and converted to a 5-point scale.

- Sedimentation: Very good 9 ~ Good 7 ~ Moderate 5 ~ Unstable 3 ~ Very unstable 1

As a result, all of Example 14 and Example 19 to Example 22 showed no sedimentation immediately after preparation, but sedimentation occurred over time after settling, and the lowest sedimentation rates were visually observed in the order of Example 21 (xanthan gum), Example 22 (carrageenan), Example 20 (guar gum), Example 19 (pectin), and Example 14 (thickener not applied) (FIG. 12).

Accordingly, it was confirmed that the mouthfeel and sedimentation rate were the most excellent under the carrageenan blending condition of Example 22, and the thickener blending condition of Example 22 was maintained in the following Examples.

**Experimental Example 6: Determination of Optimal Blending Ratio of Thickener and Acidity Regulator through Measurement of Viscosity and Sedimentation Rate**

The protein off-flavor and off-taste intensity of the protein-comprising beverages of Example 14 and Example 23 to Example 26 were measured through sensory evaluation.

In detail, the sensory evaluation was conducted on 30 researchers in the institute, and the off-taste/off-flavor intensity according to each acidity regulator was evaluated on a 9-point scale according to the following criteria, and the average value was calculated and converted to a 5-point scale.

- Intensity: Very strong 9 ~ Strong 7 ~ Moderate 5 ~ Weak 3 ~ Very weak 1

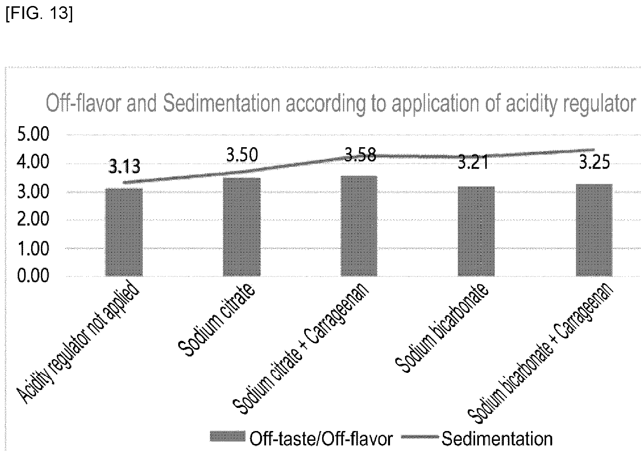

As a result, Example 24 and Example 26, to which the acidity regulator and carrageenan were added, showed almost no off-flavor due to carrageenan (FIG. 13). In addition, Example 23 and Example 24, to which sodium citrate was added as the acidity regulator, showed a slight off-taste, and Example 25 and Example 26, to which sodium bicarbonate was added, showed almost no difference in the level of off-flavor and off-taste, as compared to Example 14 (acidity regulator not applied).

Next, to evaluate the sedimentation rate of the protein-comprising beverages of Example 14 and Example 23 to Example 26, the sedimentation rate of each Example was visually examined after settling for 1 hour, and at 1 hour immediately after preparation, and evaluated on a 9-point scale according to the following criteria, and the average value was calculated and converted to a 5-point scale.

- Sedimentation: Very good 9 ~ Good 7 ~ Moderate 5 ~ Unstable 3 ~ Very unstable 1

As a result, all of Example 14 and Example 23 to Example 26 showed no sedimentation immediately after preparation, but sedimentation occurred over time after settling, and the low sedimentation rate was visually observed in Example 24 and Example 26, to which the acidity regulator and carrageenan were added (FIG. 13).

Accordingly, it was confirmed that the off-flavor, off-taste, and sedimentation rate were the most excellent in the carrageenan and sodium bicarbonate blending condition of Example 26, and the thickener and acidity regulator blending condition of Example 26 was maintained in the following Examples.

## Experimental Example 7: Determination of Optimal Blending Ratio of Thickener through Measurement of Viscosity and Sedimentation Rate

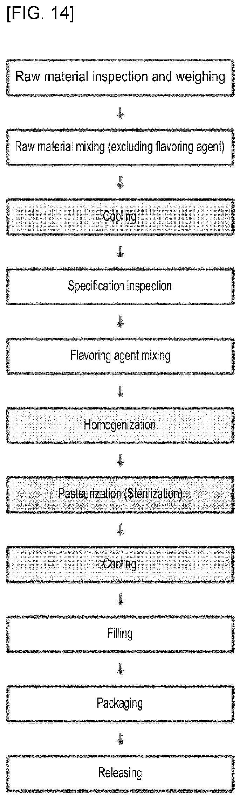

When the protein-comprising beverages of Example 22, Example 24, and Example 26 were prepared, each beverage was prepared according to Process 2 (FIG. 10) in which a primary homogenization process was included after mixing the raw materials, and thus the homogenization process was performed twice in total, or Process 3 (FIG. 14) in which the primary homogenization process was not included after mixing the raw materials, and thus the homogenization process was performed once in total, and the mouthfeel (softness) according to viscosity was measured through a sensory evaluation for the beverages prepared according to the processes.

In detail, the sensory evaluation was conducted on 30 researchers in the institute, and the viscosity and mouthfeel according to whether or not the primary homogenization process was performed were evaluated on a 9-point scale according to the following criteria, and the average value was calculated and then converted to a 5-point scale.

- Viscosity: Very soft 9 - Soft 7 - Moderate 5 - Rough 3 - Very rough 1

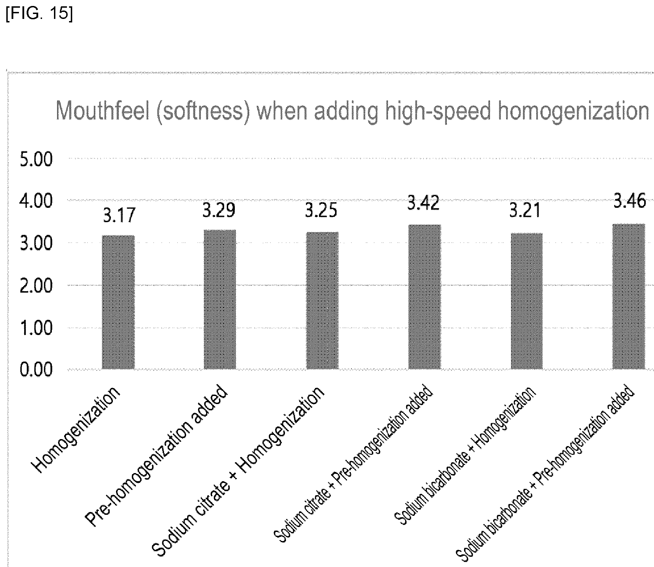

As a result, Example 22, Example 24, and Example 26 prepared by Process 2, in which the homogenization process was performed twice in total, showed improved mouthfeel, as compared to those prepared by performing the homogenization process once (FIG. 15).

Next, when the protein-comprising beverages of Example 22, Example 24, and Example 26 were prepared, each beverage was prepared according to Process 2 (FIG. 10) in which a primary homogenization process was included after mixing the raw materials, and thus the homogenization process was performed twice in total, or Process 3 (FIG. 14) in which the primary homogenization process was not included after mixing the raw materials and thus the homogenization process was performed once in total, and to evaluate the sedimentation rate of each beverage, centrifugation was performed.

In detail, 50 mL of a sample was taken from each Example, and primary centrifugation was performed at 300 rpm for 1 minute using a High-speed Refrigerated Centrifuge himac CR22N. The degree of sedimentation relative to the total amount of the beverage was defined as the degree of separation, and the degree of sedimentation relative to the solid content in the beverage was defined as the sedimentation rate, and they were calculated according to the following equations and evaluated.

$$\text{Degree of separation} = \text{Sedimentation/Total amount } 50*100$$

$$\text{Rate of sedimentation} = \text{Degree of separation/Powder raw material}*100$$

Thereafter, in order to evaluate the degree of sedimentation when Examples were preserved for a long time, Examples to which the primary centrifugation was subjected were subjected to secondary centrifugation in the same manner as above to evaluate the degree of separation and the sedimentation rate.

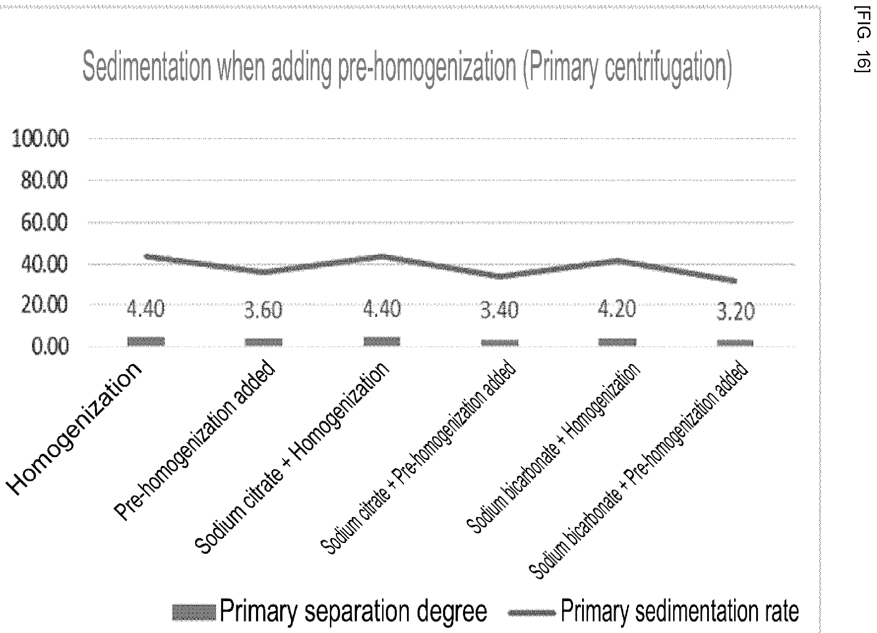

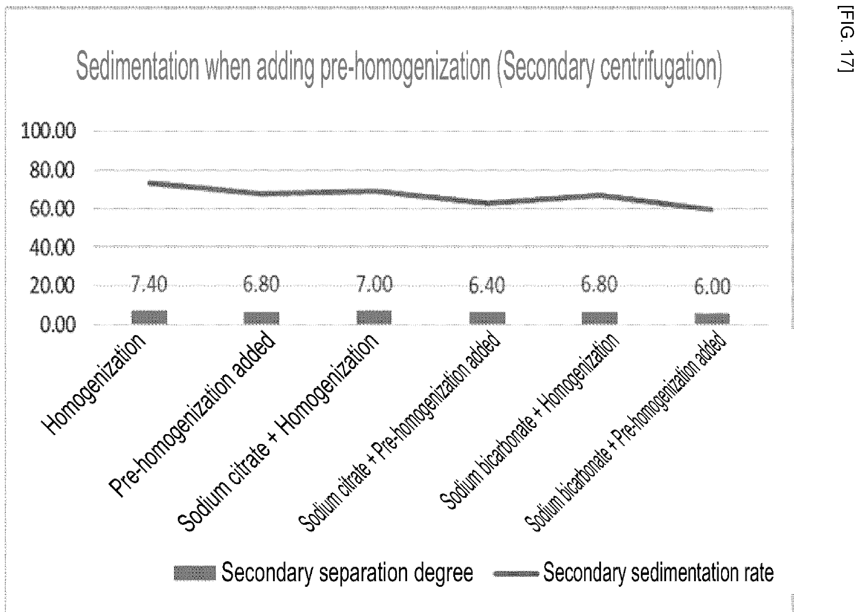

As a result, Example 22, Example 24, and Example 26, which were prepared by Process 2, in which the homogenization process was performed twice in total, showed improvement in the degree of separation and the sedimentation rate after the primary centrifugation (FIG. 16) and after the secondary centrifugation (FIG. 17), compared to those prepared by performing the homogenization process once, and thus they had a low degree of sedimentation. In addition, Example 26, which was prepared by adding carrageenan and sodium bicarbonate, had the lowest degree of sedimentation after both the primary centrifugation and the secondary centrifugation.

Accordingly, it was confirmed that the mouthfeel and sedimentation rate were the most excellent under the carrageenan and sodium bicarbonate blending condition of Example 26.

**Preparation Example: Protein-Comprising Beverage with Minimized Off-Flavor and Improved Mouthfeel**

A protein-comprising beverage comprising 8% by weight of allulose, 0.02% by weight of steviol glycoside, 10% by weight of rice protein, 1% by weight of refined palm oil, 0.05% by weight of carrageenan, 0.1% by weight of sodium bicarbonate, 0.05% by weight of lecithin, and 80% by weight to 85% by weight of purified water was prepared by the following method.

1) Mixing step: The raw materials excluding the flavoring agent were first mixed in a mixing tank at 70°C to 80°C for 10 minutes to 15 minutes.

2) Primary homogenization step: The mixture was subjected to primary homogenization in a high-pressure homogenizer at 70°C to 80°C for 15 minutes to 20 minutes under 150 bar.

3) Cooling step: The homogenized mixture was cooled to 10°C or lower.

4) Specification inspection: The sugar content (Brix) of the cooled mixture was measured using a Brix meter (ATAGO RX5000a), and pH was measured using a pH meter (METTLER TOLEDO). A mixture with a sugar content of 15 Brix to 18 Brix and a pH of 6.5 to 7.0 was selected.

5) Secondary homogenization step: The mixture of which specification inspection was completed was additionally mixed with a flavoring agent, and then subjected to secondary homogenization at 60°C to 70°C for 15 minutes to 20 minutes under 300 bar in a high-pressure homogenizer.

6) Sterilization step: The secondary homogenized mixture was sterilized by ultra-high temperature processing (UHT) at 140°C for 10 seconds.

7) Cooling step: The sterilized mixture was cooled to 25°C.

8) Packaging step: The cooled mixture was packaged by aseptic filling in Tetra Pak.

Through these steps, a vegan protein-comprising beverage may be prepared, in which sugar is reduced by using a sweetener, off-flavor of protein and fat and oil is minimized by adding the plant-based protein and vegetable fat and oil, mouthfeel (softness) is improved by adding the thickener with excellent flowability, sedimentation is minimized by adding the acidity regulator and by introducing the secondary homogenization process, and flavor is maximized by excluding the vacuum concentration process.

Based on the above description, it will be understood by those skilled in the art that the present disclosure may be implemented in a different specific form without changing the technical spirit or essential characteristics thereof. In this regard, it should be understood that the above embodiment is not limitative, but illustrative in all aspects. The scope of the disclosure is defined by the appended claims rather than by the description preceding them, and therefore all changes and modifications that fall within the metes and bounds of the claims, or equivalents of such metes and bounds are therefore intended to be embraced by the claims.

**Claims**

1. A protein-comprising food composition comprising 3% by weight to 15% by weight of a sweetener, 5% by weight to 15% by weight of a protein, 0.1% by weight to 2% by weight of fat and oil, 0.01% by weight to 0.1% by weight of a thickener, 0.05% by weight to 0.5% by weight of an acidity regulator, and 0.01% by weight to 0.1% by weight of an emulsifier, based on 100% by weight of the total food composition.

2. The protein-comprising food composition of claim 1, wherein the sweetener is any one or more selected from the group consisting of allulose, stevia, enzymatically modified stevia, steviol glycoside, sucralose, and aspartame.

3. The protein-comprising food composition of claim 2, wherein the sweetener is two or more selected from the group consisting of allulose, stevia, enzymatically modified stevia, steviol glycoside, sucralose, and aspartame.

4. The protein-comprising food composition of claim 1, wherein the protein is a plant-based protein.

5. The protein-comprising food composition of claim 4, wherein the plant-based protein is any one or more selected from the group consisting of soy protein, rice protein, corn protein, fermented cereal protein, pea protein isolate, and broad bean protein.

6. The protein-comprising food composition of claim 1, wherein the fat and oil is vegetable fat and oil.

7. The protein-comprising food composition of claim 6, wherein the vegetable fat and oil is any one or more selected from the group consisting of refined palm oil refined palm oil, sunflower oil, and canola oil.

8. The protein-comprising food composition of claim 1, wherein the thickener is any one or more selected from the group consisting of carrageenan, pectin, guar gum, and xanthan gum.

9. The protein-comprising food composition of claim 1, wherein the acidity regulator is any one or more selected from the group consisting of sodium bicarbonate and sodium citrate.

10. The protein-comprising food composition of claim 1, wherein the emulsifier is any one or more selected from the group consisting of lecithin, sucrose fatty acid ester, and glycerin fatty acid ester.

11. The protein-comprising food composition of claim 1, wherein the composition is prepared by performing a homogenization process after mixing raw materials.

12. The protein-comprising food composition of claim 11, wherein the composition is prepared by further performing the homogenization process after cooling the composition to which the homogenization process has been subjected.

13. The protein-comprising food composition of claim 11 or 12, wherein the homogenization is performed at 50°C to 80°C for 1 minute to 30 minutes under a pressure of 150 bar to 350 bar.

14. The protein-comprising food composition of claim 1, wherein the composition is prepared without performing a concentration process.

15. The protein-comprising food composition of claim 1, wherein the composition further comprises 0.1% by weight to 0.5% by weight of a flavoring agent, based on 100% by weight of the total food composition.

16. The protein-comprising food composition of claim 1, wherein the composition further comprises 80% by weight to 85% by weight of purified water, based on 100% by weight of the total food composition.

17. The protein-comprising food composition of claim 1, wherein the food composition is a beverage.

18. A method of preparing a protein-comprising food, the method comprising the steps of:

   a) preparing a mixture by mixing 3% by weight to 15% by weight of a sweetener, 5% by weight to 15% by weight of a protein, 0.1% by weight to 2% by weight of fat and oil, 0.01% by weight to 0.1% by weight of a thickener, 0.05% by weight to 0.5% by weight of an acidity regulator, and 0.01% by weight to 0.1% by weight of an emulsifier;
   b) homogenizing and then cooling the mixture; and
   c) further homogenizing and cooling the cooled mixture.

19. The method of claim 18, wherein the homogenization of the step b) or c) is performed at 50°C to 80°C for 1 minute to 30 minutes under a pressure of 150 bar to 350 bar.

20. The method of claim 18, wherein the sweetener is any one or more selected from the group consisting of allulose, stevia, enzymatically modified stevia, steviol glycoside, sucralose, and aspartame.

21. The method of claim 20, wherein the sweetener is two or more selected from the group consisting of allulose, stevia, enzymatically modified stevia, steviol glycoside, sucralose, and aspartame.

22. The method of claim 18, wherein the protein is a plant-based protein.

23. The method of claim 22, wherein the plant-based protein is any one or more selected from the group consisting of soy protein, rice protein, corn protein, fermented cereal protein, pea protein isolate, and broad bean protein.

24. The method of claim 18, wherein the fat and oil is vegetable fat and oil.

25. The method of claim 24, wherein the vegetable fat and oil is any one or more selected from the group consisting of refined palm oil, sunflower oil, and canola oil.

26. The method of claim 18, wherein the thickener is any one or more selected from the group consisting of carrageenan, pectin, guar gum, and xanthan gum.

27. The method of claim 18, wherein the acidity regulator is any one or more selected from the group consisting of sodium bicarbonate and sodium citrate.

28. The method of claim 18, wherein the method further comprises a step of adding a flavoring agent to the cooled mixture prior to the step c).

29. The method of claim 18, wherein the method further comprises a step of performing sterilization prior to the cooling after homogenization in the step c).

30. The method of claim 18, wherein the method further comprises a step of packaging the cooled mixture after the step c).

31. A protein-comprising food prepared by the method of any one of claims 18 to 30.

32. The protein-comprising food of claim 31, wherein the food is a beverage.

33. The protein-comprising food of claim 32, wherein the food comprises 10 g/mL to 15 g/mL of protein.

[FIG. 1]

[FIG. 2]

[FIG. 3]

Comparison of sweetness sub-attributes, relative to sugar

[FIG. 4]

Comparison of sweetness sub-attributes, relative to sugar

control    test2

2. Overall sweetness intensity

7. refreshing taste

3. Initial sweetness

6. bitterness

4. Sweetness persistence

5. Body feeling

[FIG. 5]

Comparison of sweetness sub-attributes, relative to sugar

control    test3

[FIG. 6]

Comparison of sweetness sub-attributes, relative to sugar

control    test4

2. Overall sweetness intensity
5.00

4.00

3.00

2.00

7. refreshing taste

3. Initial sweetness

6. bitterness

4. Sweetness persistence

5. Body feeling

[FIG. 7]

Protein off-flavor intensity according to types of plant-based protein

[FIG. 8]

Off-taste/off-flavor intensity according to application of fat and oil

Legend: Initial off-taste/off-flavor ■ Off-taste/off-flavor persistence

[FIG. 9]

```
┌─────────────────────────────────────┐
│ Raw material inspection and weighing │
└─────────────────────────────────────┘
                   ⇩
┌─────────────────────────────────────┐
│         Raw material mixing          │
└─────────────────────────────────────┘
                   ⇩
┌─────────────────────────────────────┐
│        Vacuum concentration          │
└─────────────────────────────────────┘
                   ⇩
┌─────────────────────────────────────┐
│        Pre-homogenization            │
└─────────────────────────────────────┘
                   ⇩
┌─────────────────────────────────────┐
│             Cooling                  │
└─────────────────────────────────────┘
                   ⇩
┌─────────────────────────────────────┐
│      Specification inspection        │
└─────────────────────────────────────┘
                   ⇩
┌─────────────────────────────────────┐
│          Homogenization              │
└─────────────────────────────────────┘
                   ⇩
┌─────────────────────────────────────┐
│    Pasteurization (Sterilization)    │
└─────────────────────────────────────┘
                   ⇩
┌─────────────────────────────────────┐
│             Cooling                  │
└─────────────────────────────────────┘
                   ⇩
┌─────────────────────────────────────┐
│             Filling                  │
└─────────────────────────────────────┘
                   ⇩
┌─────────────────────────────────────┐
│            Packaging                 │
└─────────────────────────────────────┘
                   ⇩
┌─────────────────────────────────────┐
│            Releasing                 │
└─────────────────────────────────────┘
```

[FIG. 10]

Raw material inspection and weighing

↓

Raw material mixing (excluding flavoring agent)

↓

Pre-homogenization

↓

Cooling

↓

Specification inspection

↓

Flavoring agent mixing

↓

Homogenization

↓

Pasteurization (Sterilization)

↓

Cooling

↓

Filling

↓

Packaging

↓

Releasing

Off-taste/off-flavor intensity according to vacuum concentration

[FIG. 12]

[FIG. 13]

Off-flavor and Sedimentation according to application of acidity regulator

[FIG. 14]

```
┌─────────────────────────────────────────────┐
│      Raw material inspection and weighing     │
└─────────────────────────────────────────────┘
                       ↓
┌─────────────────────────────────────────────┐
│   Raw material mixing (excluding flavoring agent) │
└─────────────────────────────────────────────┘
                       ↓
┌─────────────────────────────────────────────┐
│                    Cooling                    │
└─────────────────────────────────────────────┘
                       ↓
┌─────────────────────────────────────────────┐
│             Specification inspection          │
└─────────────────────────────────────────────┘
                       ↓
┌─────────────────────────────────────────────┐
│               Flavoring agent mixing          │
└─────────────────────────────────────────────┘
                       ↓
┌─────────────────────────────────────────────┐
│                 Homogenization                │
└─────────────────────────────────────────────┘
                       ↓
┌─────────────────────────────────────────────┐
│            Pasteurization (Sterilization)     │
└─────────────────────────────────────────────┘
                       ↓
┌─────────────────────────────────────────────┐
│                    Cooling                    │
└─────────────────────────────────────────────┘
                       ↓
┌─────────────────────────────────────────────┐
│                    Filling                    │
└─────────────────────────────────────────────┘
                       ↓
┌─────────────────────────────────────────────┐
│                   Packaging                   │
└─────────────────────────────────────────────┘
                       ↓
┌─────────────────────────────────────────────┐
│                   Releasing                   │
└─────────────────────────────────────────────┘
```

[FIG. 15]

Mouthfeel (softness) when adding high-speed homogenization

[FIG. 16]

Sedimentation when adding pre-homogenization (Primary centrifugation)

Legend: Primary separation degree — Primary sedimentation rate

Values: 4.40, 3.60, 4.40, 3.40, 4.20, 3.20

Categories: Homogenization, Pre-homogenization added, Sodium citrate + Homogenization, Sodium citrate + Pre-homogenization added, Sodium bicarbonate + Homogenization, Sodium bicarbonate + Pre-homogenization added

EP 4 627 933 A1

[FIG. 17]

## INTERNATIONAL SEARCH REPORT

| International application No. |
| --- |
| **PCT/KR2023/020726** |

### A. CLASSIFICATION OF SUBJECT MATTER

**A23L 2/38**(2006.01)i; **A23L 5/20**(2016.01)i; **A23L 27/30**(2016.01)i; **A23L 29/212**(2016.01)i; **A23L 29/231**(2016.01)i; **A23L 29/269**(2016.01)i; **A23L 29/10**(2016.01)i

According to International Patent Classification (IPC) or to both national classification and IPC

### B. FIELDS SEARCHED

Minimum documentation searched (classification system followed by classification symbols)

A23L 2/38(2006.01); A23L 11/00(2016.01); A23L 11/30(2016.01); A23L 2/00(2006.01); A23L 2/66(2006.01); A23L 21/10(2016.01); A23L 21/15(2016.01); A23L 27/20(2016.01); A23L 33/00(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단백질(protein), 음료(beverage), 감미료(sweetener), 식물성 유지(vegetable oil), 증점제(thickener), 산도조절제(acidity regulator), 유화제(emulsifier)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2017-0090709 A (DAESANG CORPORATION) 08 August 2017 (2017-08-08) See paragraphs [0009], [0013], [0022], [0024], [0025], [0040], [0044]-[0047], [0052]-[0054] and [0056]. | 1,4-11,13-17 |
| Y | | 2,3,12,18-33 |
| Y | JP 2022-070136 A (DAI ICHI KOGYO SEIYAKU CO., LTD.) 12 May 2022 (2022-05-12) See paragraphs [0027] and [0032]. | 2,3,12,18-33 |
| A | JP 2022-087555 A (KIRIN HOLDINGS CO., LTD.) 13 June 2022 (2022-06-13) See paragraphs [0006], [0011], [0012], [0017], [0018], [0020], [0027], [0028], [0030] and [0035]. | 1-33 |
| A | JP 2021-090412 A (API CO., LTD.) 17 June 2021 (2021-06-17) See paragraphs [0028], [0029], [0035], [0043], [0047] and [0049]. | 1-33 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 April 2024** | **09 April 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/020726** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2022-0082999 A (REPUBLIC OF KOREA(MANAGEMENT : RURAL DEVELOPMENT ADMINISTRATION)) 20 June 2022 (2022-06-20)<br>  See claim 17; and paragraphs [0034], [0037], [0039], [0041], [0042], [0045], [0047], [0049], [0050] and [0075]. | 1-33 |
| A | WO 2022-202889 A1 (AMANO ENZYME INC.) 29 September 2022 (2022-09-29)<br>  See paragraphs [0013], [0016] and [0017]. | 1-33 |

Form PCT/ISA/210 (second sheet) (July 2022)

**INTERNATIONAL SEARCH REPORT**
Information on patent family members

International application No.

**PCT/KR2023/020726**

| Patent document cited in search report | | | Publication date (day/month/year) | Patent family member(s) | | | Publication date (day/month/year) |
|---|---|---|---|---|---|---|---|
| KR | 10-2017-0090709 | A | 08 August 2017 | None | | | |
| JP | 2022-070136 | A | 12 May 2022 | None | | | |
| JP | 2022-087555 | A | 13 June 2022 | None | | | |
| JP | 2021-090412 | A | 17 June 2021 | None | | | |
| KR | 10-2022-0082999 | A | 20 June 2022 | KR | 10-2586236 | B1 | 11 October 2023 |
| WO | 2022-202889 | A1 | 29 September 2022 | CN | 116887695 | A | 13 October 2023 |
| | | | | EP | 4316267 | A1 | 07 February 2024 |
| | | | | WO | 2022-202889 | A1 | 29 September 2022 |

Form PCT/ISA/210 (patent family annex) (July 2022)